# EUROPEAN PATENT APPLICATION

(11) **EP 4 840 692 A1**
(43) Date of publication of application: **18.11.2026**
(21) Application number: 26177650.4
(22) Date of filing: 08.05.2026
(51) Int. Cl.: B60N 2/28, B60R 22/48

(54) **STRAP TENSION INDICATOR**

(30) Priority: 13.05.2025 US 202563804856 P
(71) Applicant: Britax Child Safety Inc., Fort Mill, SC 29708 (US)
(72) Inventor: Walsh, Quentin, Fort Mill, SC (US); Boldenow, Patrick, Bloomington, MN (US); Rydberg, Nicholas, Stillwater, MN (US)
(74) Representative: K&L Gates LLP

(57) **Abstract**

A strap tension indicator may include a housing and a tension indicator mechanism. The tension indicator mechanism may be disposed within the housing. The housing may include a first opening and a second opening configured to receive a strap. The tension indicator mechanism may include a torsion bar connected to and spaced from an indicator bar that is rotatably supported by the housing. A torsion spring is disposed about the indicator bar and configured to bias the indicator bar to a non-tensioned position. The strap may pass through the space between the torsion bar and the indicator bar and be configured to selectively interact with the torsion bar. The indicator bar may include an indicator graphic configured to rotate as the strap interacts with the torsion bar causing the indicator bar to simultaneously rotate. As the indicator graphic is rotated, it may become visible through a slot.

## Description

### PRIORITY CLAIM AND CROSS-REFERENCE TO RELATED APPLICATIONS

The present application claims priority to and benefit of U.S. Provisional Patent Application No. 63/804,856 filed May 13, 2025, titled "STRAP TENSION INDICATOR," the disclosure of which is incorporated by reference herein in its entirety and relied upon.

### BACKGROUND

Child restraint systems, also commonly called child safety seats, child seats, car seats, or booster seats, among others, are designed to protect children in vehicles from the effects of impacts or sudden changes in motion (e.g., sudden acceleration, sudden deceleration, and the like). Child restraint systems, referred to hereinafter as child seats, may be used in a variety of vehicles with different seat types and/or seating configurations.

It is critical for child seats to be properly secured to the vehicle seat to protect the occupant. It is also critical for the occupant to be properly secured to the child seat. Current technology relies on a user to apply adequate amounts of tension to the various straps and belts associated with child seats to secure the child seat to the vehicle and to secure the occupant to the child seat. There are numerous issues involved with relying on a user's subjective sense of when an adequate amount of tension has been applied including not applying enough tension and applying too much tension. In both of these scenarios, the occupant could be injured. For example, if not enough tension is applied, an occupant could fall out of the child seat or the child seat could become unsecured from the vehicle's seat in an accident. If too much tension is applied, an occupant may experience discomfort; likewise, mechanical features of the child seat could be damaged in an over-tensioning scenario. In turn, there is a need for a reliable and easy-to-understand indication mechanism to indicate to a user when an adequate amount of tension has been applied to the straps and belts of a child seat.

Furthermore, there is an important distinction between no tension and some tension when it comes to properly restraining an occupant in a child seat or a child seat to a vehicle. Namely, there can be some tension that is below the amount deemed adequate to properly secure the occupant or the child seat. In this scenario, a binary indicator of tension would mislead the user to believe that the user has applied an adequate amount of tension. Binary tension indicators are not ideal for indicating when an adequate amount of tension is achieved-a problem that the present disclosure seeks to resolve.

### SUMMARY

Example apparatuses and methods are disclosed herein for a strap tension indicator.

In some aspects, a strap tension indicator includes a housing and a tension indicator mechanism disposed within the housing. The housing is disposed about a strap. The strap is configured to engage the tension indicator mechanism. The tension indicator mechanism is configured to indicate to a user an amount of tension on the strap.

In some aspects, the housing further includes a first opening and a second opening, the first opening and the second opening configured to receive the strap. The housing further includes a slot configured to allow the user to view the tension indicator mechanism.

In some aspects, the tension indicator mechanism further includes an indicator bar rotatably supported by the housing and a torsion bar attached to the indicator bar. The torsion bar is parallel relative to and spaced from the indicator bar, and the torsion bar is configured to engage the strap. The tension indicator mechanism further includes a torsion spring disposed about the indicator bar and configured to bias the indicator bar towards a non-tensioned position.

In some aspects, the indicator bar further includes an indicator graphic configured to indicate to the user the amount of tension on the strap. The indicator graphic is shaped such that as the strap is subjected to tension, the indicator graphic becomes more visible through the slot.

In some aspects, a method of indicating an amount of tension a strap, the method includes inserting the strap through a housing, engaging the strap with a tension indicating mechanism, tensioning the strap, and indicating the amount of tension the strap.

In some aspects, the strap is received through a first opening and a second opening of the housing. The housing further includes a slot configured to display a graphic.

In some aspects, the tension indicating mechanism further includes a torsion bar attached to and spaced from an indicator bar. The torsion bar and indicator bar are parallel relative to each other.

In some aspects, the method further includes engaging the strap with the torsion bar by tensioning the strap.

In some aspects, the method further includes rotating the indicator bar to display the graphic through the slot.

In some aspects, a child safety seat system, the system including a child safety seat, and strap tension indicator, the strap tension indicator including a housing, and a tension indicator mechanism disposed within the housing, the housing is disposed about a strap, the strap is configured to engage the tension indicator mechanism, and the tension indicator mechanism is configured to indicate an amount of tension on the strap.

In some aspects, the strap is received through a first opening and a second opening of the housing.

In some aspects, the housing further comprises a slot configured to display a graphic.

In some aspects, the tension indicating mechanism further comprises a torsion bar attached to and spaced from an indicator bar, the torsion bar and indicator bar are parallel relative to each other.

In some aspects, further comprising engaging the strap with the torsion bar by tensioning the strap.

In some aspects, further comprising rotating the indicator bar to display the graphic through the slot.

In light of the present disclosure and the above aspects, it is therefore an advantage of the present disclosure to provide users with a reliable and easy-to-understand tension indication mechanism.

Additional features and advantages are described in, and will be apparent from, the following Detailed Description and the Figures. The features and advantages described herein are not all-inclusive and, in particular, many additional features and advantages will be apparent to one of ordinary skill in the art in view of the figures and description. In addition, any particular embodiment does not have to have all of the advantages listed herein and it is expressly contemplated to claim individual advantageous embodiments separately. Moreover, it should be noted that the language used in the specification has been selected principally for readability and instructional purposes, and not to limit the scope of the inventive subject matter.

### BRIEF DESCRIPTION OF THE FIGURES

The specification makes reference to the following appended figures, in which use of like reference numerals in different figures is intended to illustrate like or analogous components.
Figure 1 illustrates a front isometric view of an embodiment of the present disclosure, in a non-tensioned configuration.
Figure 2 illustrates a front isometric view of an embodiment of the present disclosure, in a tensioned configuration.
Figure 3 illustrates different embodiments of the indicator graphic of the present disclosure.

### DETAILED DESCRIPTION

Example embodiments will now be described more fully with reference to the accompanying drawings.

Example embodiments are provided so that this disclosure will be thorough and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. **In** some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or additional of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent"). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Described herein are apparatuses and methods for indicating the amount of tension on a strap. Various advantages and benefits may be realized with strap tension indicators described herein, and the aforementioned benefits and advantages should not be considered limiting.

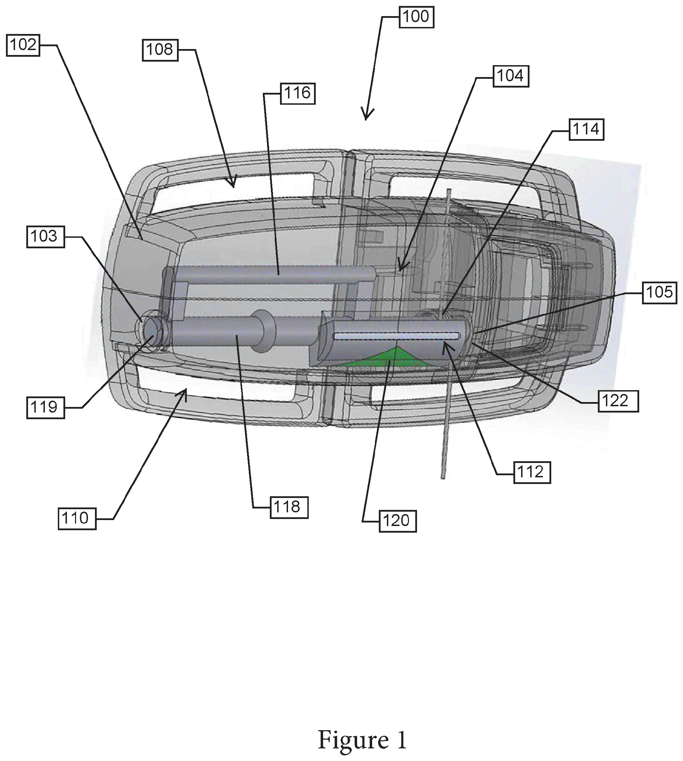

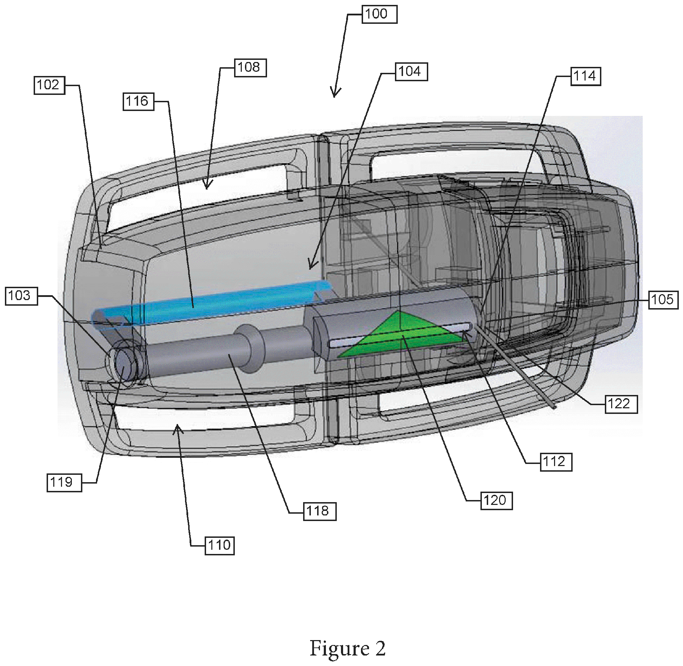

Figures 1 and 2 illustrate isometric views of a strap tension indicator 100. The strap tension indicator 100 may include a housing 102 and a tension indicator mechanism 104. The housing 102 may include a first opening 108, a second opening 110, and a slot 112. The first opening 108 and second opening 110 may be configured to receive a strap 106 (not shown) such that the housing 102 is disposed about the strap 106. In an exemplary embodiment, housing 102 is a chest-clip, configured for use with a shoulder strap of a child seat. Namely, in this exemplary embodiment, one of two shoulder straps is fed between first opening 108 and second opening 110. It should be appreciated, however, that alternative positions of housing 102 could likewise provide a user with useful information regarding strap tension.

Continuing on, the strap 106 may be configured to engage the tension indicator mechanism 104. More specifically, the tension indicator mechanism 104 may be disposed within the housing 102 and include a torsion bar 116, an indicator bar 118, and a torsion spring 114. The indicator bar 118 may include an indicator graphic 120 configured to be viewable through the slot 112 of housing 102. As the strap 106 is subjected to tension (e.g., via a user tightening or loosening the strap 106), the strap 106 engages the tension indicator mechanism 104; this causes torsion bar 116 to pivot and indicator bar 118 to rotate to display at least a portion of indicator graphic 120 through the slot 112. Namely, when tension is applied to strap 106, the tension indicator mechanism 104 may indicate an amount of tension the strap 106.

As illustrated, the indicator bar 118 may be rotatably supported within the housing 102. A first end 119 of the indicator bar 118 may be rotatably supported by a first cavity 103 of the housing 102 and a second end 122 of the indicator bar 118 may be rotatably supported by a second cavity 105 of the housing 102. The torsion spring 114 may be disposed about one of the first end 119 or the second end 122 of the indicator bar 118 and be configured to bias the indicator bar 118 toward a non-tensioned position. The torsion bar 116 may be spaced from the indicator bar 118 and oriented parallel to the indicator bar 118. The torsion bar 116 may be fixed to the indicator bar 118. In the non-tensioned position, as illustrated in Figure 1, the torsion bar 116 is above and generally coplanar with indicator bar 118.

As noted previously, the strap 106 may be received by the first opening 108 of the housing 102 and the second opening 110 of the housing 102. The strap 106 may also pass through the space between the indicator bar 118 and the torsion bar 116. In this configuration, as the strap 106 is tightened, i.e., as tension is applied, the strap 106 engages the torsion bar 116 causing the torsion bar 116 to rotate relative to the indicator bar 118. As the torsion bar 116 rotates, the indicator bar 118 is simultaneously rotates due to the fixed connection between the torsion bar 116 and the indicator bar 118. Furthermore, as the indicator bar 118 rotates, the indicator graphic 120 rotates relative to the slot 112. As the indicator graphic 120 rotates relative to the slot 112, the indicator graphic 120 becomes more visible through the slot 112. In a non-limiting example, 4N of tension on strap 106 is a sufficient amount to cause rotation of indicator bar 118, and thus cause visibility of indicator graphic 120 through slot 112.

Figure 1 illustrates the strap tension indicator 100 indicating to the user that the strap 106 (not shown) is subject to little or no tension as evidenced by the lack of visibility of the indicator graphic 120 through the slot 112-a non-tensioned position. Figure 2 illustrates the strap tension indicator 100 indicating to the user that the strap 106 (not shown) is subject to some tension, as evidenced by the visibility of the indicator graphic 120 through the slot 112-a tensioned position.

As shown in Figures 1 and 2, the indicator graphic 120 is in the shape of a triangle. The triangular shape allows the user to visually confirm whether the strap 106 is subject to tension and how much tension is on the strap 106. In this embodiment, the indicator graphic 120 is oriented such that as the strap 106 is subjected to tension, the first portion of the indicator graphic 120 that is viewable through the slot 112 is a single corner of the triangle. As the strap 106 is subjected to more tension, more of the triangle becomes visible until ultimately the two corners opposite the initial corner are visible and a large portion of the slot 112 is occupied by the indicator graphic 120.

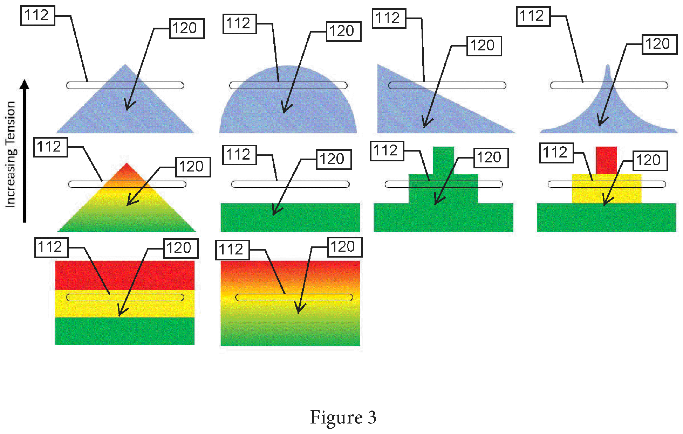

It should be appreciated that the indicator graphic 120 may be a variety of different shapes or other visual aids including. For example, as shown in Figure 3, the indicator graphic 120 may be in the shape of a triangle, half-circle, rectangle, a stacked series of rectangular shapes, or the like. Also, as shown in Figure 3, the indicator graphic 120 may be a variety of colors. More specifically, the indicator graphic's 120 color scheme may be a gradient configured to indicate an amount of tension to a user (e.g., red - little to no tension, yellow - some tension, and green - sufficient tension). Similarly, as shown in Figure 3, in certain embodiments the indicator graphic 120 may have binary indicators (e.g., no color shown vs. color shown and/or first color shown vs. second color shown).

In some embodiments, the strap tension indicator 100 may additionally or alternatively rely on other non-visual means of indicating tension. For example, the strap tension indicator 100 may include an auditory element-such as a tone or chime-configured to indicate to the user the amount of tension on the strap 106. In another example, the strap tension indicator 100 may include a visual indicator such as a light array configured to indicate to the user the amount of tension on the strap 106. These alternative measurements could implement pressure sensors, and other related mechanical means, for measuring tension.

In other embodiments, the strap tension indicator 100 may be communicatively coupled to the vehicle's safety system-via Bluetooth^{®} or other, similar means-to indicate to the user the amount of tension on the strap 106. In this embodiment, the strap tension indicator 100 may operate in a similar fashion as the alert given when a vehicle detects a user in a seat and the seatbelt is not secured. For example, as tension is applied to the strap 106, a chime or tone may be played over the vehicle's speaker system to indicate when an adequate amount of tension has been placed on the strap 106. Similar notifications could be provided to a user device, such as a cell phone.

In certain embodiments, such as shown in Figures 1 and 2, the strap tension indicator 100 may be incorporated into a chest clip of a child restraint system. However, it should be appreciated that the strap tension indicator 100 may be incorporated into other portions of a child restraint system and other applications entirely. For example, child seats may be secured to a vehicle using the vehicle's seat belt, the Lower Anchors and Tethers for Children ("LATCH") system, or the top tether anchor. For each of these different securing scenarios, it is imperative that the child seat be properly secured using sufficient tension. In this example, one could position housing 102 along one of several LATCH straps to ensure adequate tension between a LATCH anchor and a child seat. Likewise, for example, one could position housing 102 along a top tether to ensure adequate tension.

In another embodiment, the strap tension indicator 100 may be incorporated into the child restraint system-for example, molded into the base area, the chest area, or the head area of the child restraint system. In other embodiments, the strap tension indicator 100 may be incorporated into a vehicle. For example, the vehicle's seats or anchor points may include the strap tension indicator 100 to indicate to users where adequate tension has been applied to a strap. In these applications, similarly to the embodiment depicted in Figures 1 and 2, the strap 106 may be received through the strap tension indicator 100.

In still other embodiments, the strap tension indicator 100 may be incorporated into applications outside those associated with restraining a child in a vehicle. For example, the strap tension indicator 100 may be used to ensure adequate tension when securing a load for transportation or storage. In these applications, the strap tension indicator 100 may be portable such that the strap tension indicator 100 is able to be received on different types of straps 106 and other means for securing loads.

The amount of tension necessary to be considered adequate may vary across the different applications of the strap tension indicator 100. It is understood and contemplated that the strap tension indicator 100 will be properly calibrated for each type of application the strap tension indicator 100 is applied to. For instance, to properly calibrate the strap tension indicator 100, the amount of force required to bias the torsion spring 114 to a tensioned position would be measured and adjustments would be made to the tension indicator mechanism 104 as appropriate.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A strap tension indicator comprising:
a housing; and
a tension indicator mechanism disposed within the housing;
wherein the housing is disposed about a strap;
wherein the strap is configured to engage the tension indicator mechanism; and
wherein the tension indicator mechanism is configured to indicate an amount of tension on the strap.

2. The strap tension indicator of claim 1, wherein the housing further comprises a first opening and a second opening, the first opening and the second opening configured to receive the strap.

3. The strap tension indicator of claim 1, wherein the housing further comprises a slot configured to allow the user to view the tension indicator mechanism.

4. The strap tension indicator of claim 3, wherein the tension indicator mechanism further comprises an indicator bar rotatably supported by the housing and a torsion bar attached to the indicator bar, wherein the torsion bar is parallel relative to and spaced from the indicator bar.

5. The strap tension indicator of claim 4, wherein the torsion bar is configured to engage the strap.

6. The strap tension indicator of claim 5, wherein the tension indicator mechanism further comprises a torsion spring disposed about the indicator bar and configured to bias the indicator bar towards a non-tensioned position.

7. The strap tension indicator of claim 6, wherein the indicator bar further comprises an indicator graphic configured to indicate the amount of tension on the strap.

8. The strap tension indicator of claim 7, wherein the indicator graphic is shaped such that as the strap is subjected to tension, the indicator graphic becomes more visible through the slot.

9. A method of indicating an amount of tension on a strap, the method comprising:
inserting the strap through a housing;
engaging the strap with a tension indicating mechanism;
tensioning the strap; and
indicating the amount of tension on the strap.

10. The method of claim 9, wherein the strap is received through a first opening and a second opening of the housing.

11. The method of claim 10, wherein the housing further comprises a slot configured to display a graphic.

12. The method of claim 11, wherein the tension indicating mechanism further comprises a torsion bar attached to and spaced from an indicator bar, wherein the torsion bar and indicator bar are parallel relative to each other.

13. The method of claim 12, further comprising engaging the strap with the torsion bar by tensioning the strap.

14. The method of claim 13, further comprising rotating the indicator bar to display the graphic through the slot.

15. A child safety seat system, the system comprising:
a child safety seat, and
strap tension indicator, the strap tension indicator comprising:
a housing; and
a tension indicator mechanism disposed within the housing;
wherein the housing is disposed about a strap;
wherein the strap is configured to engage the tension indicator mechanism; and
wherein the tension indicator mechanism is configured to indicate an amount of tension on the strap.

16. The system of claim 15, wherein the strap is received through a first opening and a second opening of the housing.

17. The system of claim 16, wherein the housing further comprises a slot configured to display a graphic.

18. The system of claim 17, wherein the tension indicating mechanism further comprises a torsion bar attached to and spaced from an indicator bar, wherein the torsion bar and indicator bar are parallel relative to each other.

19. The system of claim 18, further comprising engaging the strap with the torsion bar by tensioning the strap.

20. The system of claim 19, further comprising rotating the indicator bar to display the graphic through the slot.
